# EUROPÄISCHE PATENTSCHRIFT

(11) **EP 0 727 859 B1**
(45) Veröffentlichungstag und Bekanntmachung des Hinweises auf die Patenterteilung: **16.08.2000**
(21) Anmeldenummer: 96102146.6
(22) Anmeldetag: 14.02.1996
(51) Int. Cl.: H02J 3/28

(54) **Verfahren zur Verbesserung der Spannungsqualität in einem Drehstromnetz und Anlage für die Durchführung des Verfahrens**
Method for improving the power quality in an alternative distribution network and apparatus therefor
Méthode pour améliorer la qualité de la tension dans un réseau de courant alternatif et dispositif pour la mise en oeuvre du procédé

(30) Priorität: 17.02.1995 DE 19505428
(43) Veröffentlichungstag der Anmeldung: 21.08.1996
(73) Patentinhaber: RWE Energie Aktiengesellschaft, 45128 Essen (DE)
(72) Erfinder: Barth, Peter, Dipl.-Ing., D-45276 Essen (DE); Kleimaier, Martin, Dr.-Ing., D-45239 Essen (DE); Pestka, Joachim, Dr.-Ing., D-46244 Bottrop (DE); Ratering-Schnitzler, Berthold, Dipl.-Ing., D-46282 Dorsten (DE)
(74) Vertreter: Honke, Manfred, Dr.-Ing.

(56) Entgegenhaltungen:
- US-A- 5 321 598
- US-A- 5 369 353
- SCOTT ET AL: 'Messungen an einem aktiven Saugkreis' ELEKTROTECHNISCHE ZEITSCHRIFT Bd. 114, Nr. 22, November 1993, BERLIN, Seiten 1370 - 1373, XP000421072
- LIAW ET ALL: "design and implementation of a single-phase three-wire transformerless battery energy storage system" IEEE TRANSACTIONS ON INDUSTRIAL ELECTRONICS, Bd. 41, Nr. 5, Oktober 1994, NEW YORK, Seiten 540-549, XP000473099

## Beschreibung

Die Erfindung betrifft ein Verfahren zur Verbesserung der Spannungsqualität in einem Drehstromnetz durch Leistungseinspeisung aus einem Energiespeicher mit Hilfe eines aktiven Kompensators. Die Erfindung betrifft fernerhin eine Anlage für die Durchführung eines solchen Verfahrens. - Der aktive Kompensator hat bei einem Drehstromnetz die Aufgabe, durch zusätzliche Leistungseinspeisung in das Drehstromnetz oder Leistungsentnahme aus dem Drehstromnetz zur Verbesserung der Spannungsqualität beizutragen. Die im Falle eines Spannungseinbruchs benötigte Zusatzleistung wird aus dem Energiespeicher zur Verfügung gestellt und über einen Umrichter in das Drehstromnetz eingespeist, - und umgekehrt bei Spannungsspitzen. Der Begriff Leistungseinspeisung umfasst positive und negative Leistung, anders ausgedrückt das Einschleusen von Leistung in das Drehstromnetz und das Ausschleusen von Leistung aus dem Drehstromnetz und damit das Laden und Entladen des Energiespeichers. Verbesserung der Spannungsqualität meint im Rahmen der Erfindung insbesondere unterbrechungsfreie Stromversorgung, Behebung von Spannungsschwankungen und von sog. Flickern, Oberschwingungen, Blindleistungskompensation, Primärregelung, Rundsteuerung, aber auch Ausgleich von Lastspitzen im Rahmen der vorhandenen Speicherleistung.

Verfahren zur Verbesserung der Spannungsqualität in einem Drehstromnetz sind bekannt. Insbesondere ist bekannt, nicht mit aktiven Kompensatoren, sondern mit Kompensatoren in LC-Technik zu arbeiten. Die Erfindung geht demgegenüber aus von aktiven Kompensatoren, die einen Umkehr-Stromrichter, einen Energiespeicher (z. B. in Form einer Akkumulatorenbatterie oder in Form eines supraleitenden magnetischen Energiespeichers) aufweisen und mit einem Regler arbeiten. Der Regler arbeitet dabei und nach der herrschenden Lehre im Frequenzbereich. Dazu ist es erforderlich, zunächst die störenden Frequenzphänomene im Drehstromnetz zu erfassen, zu analysieren und auszuwerten, sowie nach Maßgabe der Auswertung eine Gegensteuerung vorzunehmen. Das nimmt eine Vielzahl von Millisekunden in Anspruch, was eine störende Reaktionsverzögerung bewirkt. Die erreichbare Verbesserung der Spannungsqualität findet dadurch eine Schranke. Bezüglich der Einzelheiten wird auf die einschlägige Literatur verwiesen, z. B. auf H. Ungrad u.a. "Schutztechnik in Elektroenergiesystemen", S. 283 bis 289, S. 366 bis 372, Springer 1994, und auf Tietze, Schenk "Halbleiter-Schaltungstechnik" Abschnitt 27.4 bis 27.4.5, Springer 1993.

Der Erfindung liegt das technische Problem zugrunde, bei einem Verfahren zur Verbesserung der Spannungsqualität in einem Drehstromnetz die vorstehend beschriebene Reaktionsverzögerung zu unterdrücken.

Zur Lösung dieses technischen Problems lehrt die Erfindung ein Verfahren zur Verbesserung der Spannungsqualität in einem Drehstromnetz durch Leistungseinspeisung aus einem Energiespeicher mit Hilfe eines aktiven Kompensators mit den Merkmalen:
1.1) An jede der drei Phasen des Drehstromnetzes wird ein Umkehr-Stromrichter angeschlossen, der je nach dem augenblicklichen Leistungseinspeisungsbedarf des Drehstromnetzes den Energiespeicher entlädt oder lädt,
1.2) die drei Umkehr-Stromrichter werden andererseits an einen Energiespeicher angeschlossen,
1.3) in Echtzeit wird die im Drehstromnetz vorliegende momentane Ist-Spannung erfaßt und einem Rechner zugeführt, der in Echtzeit daraus eine ideale Soll-Spannung ermittelt,
1.4) die Umkehr-Stromrichter werden über einen Regler nach Maßgabe der Differenz zwischen der momentanen Ist-Spannung und der idealen Soll-Spannung gesteuert,
wobei der Rechner für die Ermittlung der idealen Soll-Spannung nach Maßgaben eines Bandpaß-Modells betrieben wird, welches aus zwei hintereinander geschalteten Bandpässen besteht, die auf eine Frequenz von 50 Hz ± 0,1 Hz abgestimmt sind und durch Hintereinanderschaltung phasendrehungsfrei arbeiten sowie eine Übertragungsfunktion 1 aufweisen. Nach bevorzugter Ausführungsform der Erfindung wird dabei eine ideale Soll-Spannung in Form einer oberschwingungsfreien 50 Hz Sinusspannung ermittelt.

Die momentane Ist-Spannung wird erfindungsgemäß in Echtzeit ermittelt. Die vom Rechner gelieferte ideale Soll-Spannung wird in Echtzeit mit der momentanen Ist-Spannung verglichen. Echtzeit bezeichnet im Rahmen der Erfindung ein Zeitelement, welches nicht durch eine Vielzahl von Millisekunden, sondern durch Bruchteile einer einzigen Millisekunde definiert ist. Dieses Zeitelement ist kein Zeitpunkt, kommt jedoch der Gleichzeitigkeit nahe. Die Verzögerung, mit der die ideale Soll-Spannung zur Verfügung steht, ist so kurz, daß die beschriebenen, auf Reaktionszeitverzögerung beruhenden Störungen nicht mehr auftreten. Moderne Rechner arbeiten so, daß auch die ideale Soll-Spannung in Bruchteilen einer Millisekunde zur Verfügung steht.

Umkehr-Stromrichter sind in verschiedenen Ausführungsformen bekannt, insbesondere auch als pulsweitenmodulierte Stromrichter. Die Umkehr-Stromrichter werden erfindungsgemäß im allgemeinen an eine Akkumulatorenbatterie als Energiespeicher angeschlossen. Im Rahmen der Erfindung liegt aber auch, obgleich es aufwendiger ist, die Umkehr-Stromrichter an einen supraleitenden magnetischen Energiespeicher oder an einen anderen Energiespeicher anzuschließen. Als solche kommen z. B. Windkraftanlagen, Solarzellenanlagen und Brennstoffzellenanlagen in Frage, sie arbeiten im Rahmen der Erfindung mit Stromeinspeisung in das Netz bzw. Stromentnahme aus dem Netz und Einspeicherung in die zugehörigen Energiespeicher.

Die Erfindung geht von der Erkenntnis aus, daß zur Verbesserung der Spannungsqualität in einem Drehstromnetz durch Leistungseinspeisung ein Arbeiten im Frequenzbereich nicht erforderlich und auch nicht hilfreich ist. Die Erfindung geht von der weiteren Erkenntnis aus, daß ausgehend von den bekannten Maßnahmen 1.1) und 1.2) in Echtzeit, das heißt in dem schon definierten Zeitelement gearbeitet werden kann, wenn in Kombination zu den Maßnahmen 1.1) und 1.2) die Maßnahmen 1.3) und 1.4) verwirklicht werden und der Rechner, wie beschrieben eingerichtet und betrieben wird.

Im einzelnen bestehen mehrere Möglichkeiten der weiteren Ausbildung und Gestaltung des erfindungsgemäßen Verfahrens. Diese sind in den Patentansprüchen 5 bis 8 angegeben. Gegenstand der Erfindung ist auch eine Anlage zur Durchführung des Verfahrens, deren Bauelemente zu einer eigenständigen Einheit zusammengefaßt sind, die als Einspeisungsmodul in Verbindung mit Drehstromnetzen vielfältig eingesetzt werden kann.

Im folgenden wird die Erfindung anhand einer lediglich ein Ausführungsbeispiel darstellenden Zeichnung erläutert. Es zeigen
- Fig. 1: ein Schema einer Anlage, die für das erfindungsgemäße Verfahren eingerichtet ist,
- Fig. 2: ein Schema des Bandpaßmodells für den Rechner der Anlage,
- Fig. 3: eine schematische Darstellung zur Erläuterung des Regelvorganges,
- Fig. 4, 5 und 6: graphische Darstellungen, welche die durch die Erfindung erreichten Wirkungen erkennen lassen.

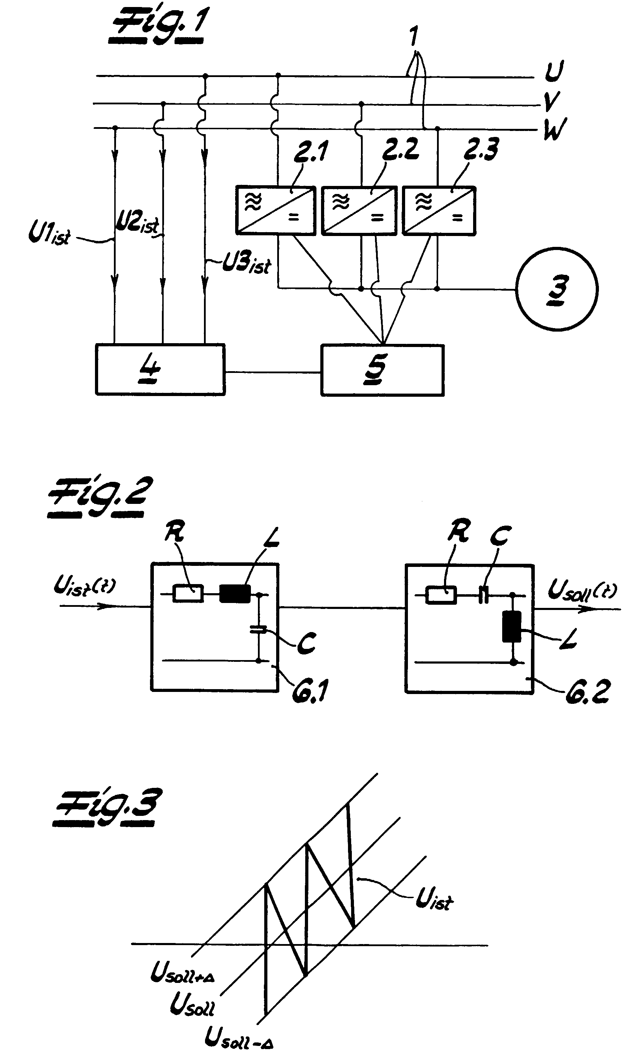

In Fig. 1 erkennt man die drei Leiter eines Drehstromnetzes 1, U, V, W. Jede der drei Phasen U, V und W ist an einen Umkehr-Stromrichter 2.1, 2.2 bzw. 2.3 angeschlossen. Die Umkehrstromrichter 2.1, 2.2 und 2.3 sind an den gleichen und gemeinsamen Energiespeicher 3 angeschlossen. In Echtzeit wird die im Drehstromnetz vorliegende momentane Ist-Spannung erfaßt und einem Rechner 4 zugeführt, der in Echtzeit daraus eine momenante ideale Soll-Spannung ermittelt. Die Pfeile U1ᵢₛₜ, U2ᵢₛₜ, und U3ᵢₛₜ deuten in Fig. 1 das Erfassen der momentanen Ist-Spannungen und das Zuführen dieser Ist-Spannungen zu dem Rechner 4 an. Die Umkehr-Stromrichter 2.1, 2.2 und 2.3 sind mit dem Regler 5 verbunden. Sie werden von diesem nach Maßgabe der Differenz zwischen der momentanen Ist-Spannung und der momentanen idealen Soll-Spannung gesteuert.

In der Fig. 2 erkennt man ein Bandpaßmodell mit zwei hintereinander geschalteten Bandpässen 6.1 und 6.2. Die Anordnung und Schaltung sind so getroffen, daß das Bandpaßmodell in allen Frequenzen im Bereich 50 Hz ± 0,1 Hz ausreichend exakt die Übertragungsfunktion 1 aufweist. Die beiden Bandpässe 6.1 und 6.2 arbeiten in Reihenschaltung phasendrehungsfrei. Das wird durch die unterschiedliche Position der Induktivitäten L und der Kapazitäten C in den Bandpässen erreicht. Letzteres bewirkt bei im übrigen gleicher Auslegung der Bandpässe 6.1 und 6.2, daß sich die Phasendrehungen kompensieren.

Die Bandpaßgüte ist durch den Widerstand R auf jeweils 50 begrenzt.

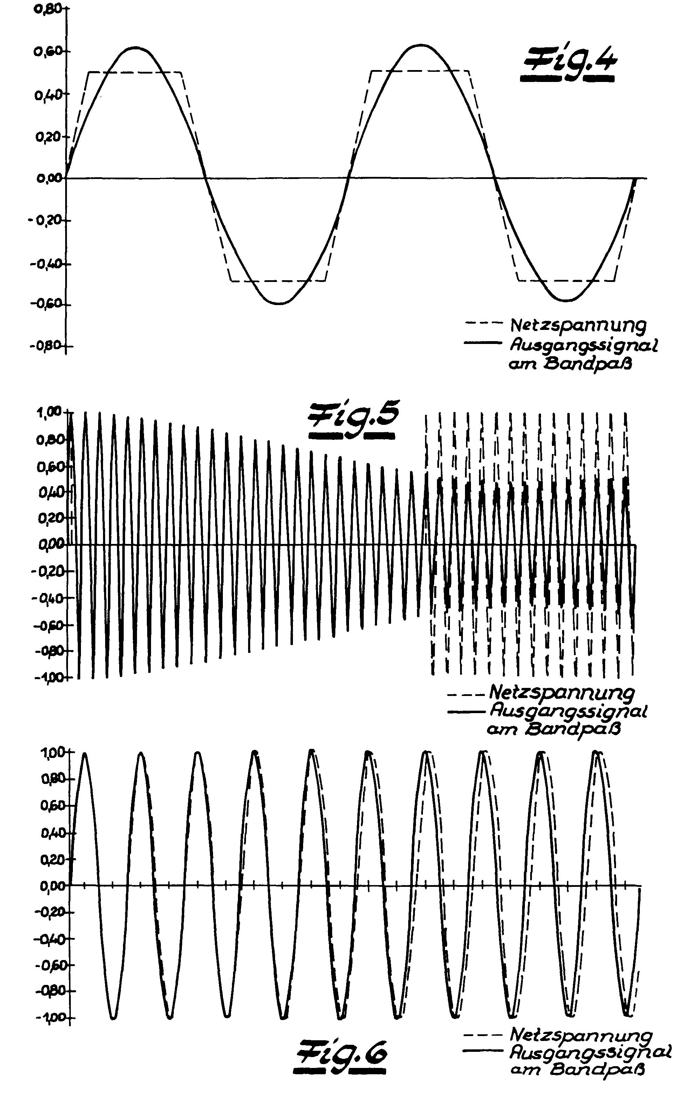

Die Umkehr-Stromrichter 2.1, 2.2 und 2.3 mögen im Ausführungsbeispiel als pulsweitenmodulierte Stromrichter ausgeführt sein. Ein solcher liefert grundsätzlich abwechselnd positiven oder negativen Nennstrom, wobei die momentanen Taktverhältnisse durch eine entsprechende Steuerung vorgegeben werden. Ist zum Beispiel die momentane Ist-Spannung kleiner als die ideale Soll-Spannung, so muß die Spannung durch Einspeisung des positiven Stroms so lange erhöht werden, bis die momentane Ist-Spannung eine obere Schwelle erreicht. Anschließend stellt die Steuerung auf negativen Strom um, der wiederum so lange fließt, bis eine untere Schwelle erreicht wird. Dazu wird auf die Fig. 3 verwiesen, wo die momentanen Spannungen als Uᵢₛₜ, Uₛₒₗₗ, U_{soll + Δ},U_{soll - Δ} dargestellt worden sind. Je nach Bedarf kann der hochfrequente Rippel durch kleine L/C-Filter kompensiert werden. Zur Realisierung dieser Regelung muß die momentane ideale Soll-Spannung aus der im Netz vorliegenden momentanen Ist-Spannung errechnet werden. Das geschieht über die schon erläuterten, hintereinander geschalteten, Bandpässe 6.1 und 6.2. Wie bereits erwähnt, ist es wesentlich, daß die Hintereinanderschaltung bei allen Frequenzen im Bereich 50 Hz ± 0,1 Hz ausreichend exakt die Übertragungsfunktion 1 aufweist und daß keine Phasendrehung auftritt.

Die beschriebene Bandpaßfunktion läßt sich auf bekannte Art und Weise im Software-Programm für den Rechner 4 transformieren und der Rechner 4 kann den Regler 5 mit entsprechenden Führungsgrößen versorgen. Im Ergebnis wird in Echtzeit gearbeitet und sind die einleitend beschriebenen Reaktionsverzögerungen unterdrückt.

In den Fig. 4, 5 und 6 wird die Wirksamkeit des erfindungsgemäßen Verfahrens an einigen Beispielen erläutert.

Fig. 4 zeigt einen Test bei starken Oberschwingungen. Die Ist-Spannung Uᵢₛₜ (t) = sin ωt wurde so abgeschnitten, daß alle Werte, die betragsmäßig über 0,5 lagen, auf 0,5 gesetzt wurden. Wie Fig. 4 zeigt, ist die ideale Soll-Spannung Uₛₒₗₗ(t), der ideale 50-Hz-Grundschwingungssinus.

Fig. 5 zeigt eine Kurzunterbrechung von 500 ms. Die momentane ideale Soll-Spannung schwingt, wie gewünscht, mit 50 Hz weiter und nimmt nur allmählich in der Amplitude ab. Hier ist erkennbar, daß bei beliebigen Spannungseinbrüchen ein Spannungssollwert vorgegeben wird, der einen einwandfreien Weiterbetrieb aller Kundenanlagen ermöglicht. Damit ist die Funktion als dynamische Flickerkompensation sowie als unterbrechungsfreie Stromversorgung bestätigt.

Fig. 6 zeigt einen Test zur Primärregelung. Nach dem Einbruch der Netzfrequenz auf 49,5 Hz schwingt die ideale Soll-Spannung mit 50 Hz weiter und paßt sich erst zeitverzögert der neuen Netzfrequenz an. Dies ruft, wie gewünscht, zusätzliche Wirkleistungseinspeisung hervor. Dadurch wird die Netzfrequenz gestützt. Wird bei einer Anlage für die Durchführung des erfindungsgemäßen Verfahrens der Speicher 3 hinreichend groß ausgelegt, können den beschriebenen schnellen Regelvorgängen noch weitere langsam nachregelnde Funktionen überlagert werden. Stellt sich heraus, daß am Netzanschluß die Spannung insgesamt zu niedrig ist, kann der Spannungssollwert erhöht werden, so daß die Anlage zusätzlich zur Spannungsstützung Blindleistung ins Netz speist. Selbst Primärregelungseigenschaften sind einrichtbar.

## Patentansprüche

1. Verfahren zur Verbesserung der Spannungsqualität in einem Drehstromnetz durch Leistungseinspeisung aus einem Energiespeicher (3) mit Hilfe eines aktiven Kompensators mit den Merkmalen:
1.1) An jede der drei Phasen des Drehstromnetzes wird ein Umkehr-Stromrichter (2.1, 2.2, 2.3) angeschlossen, der je nach dem augenblicklichen einspeisungsbedarf des Drehstromnetzes den Energiespeicher (3) lädt oder entlädt,
1.2) die drei Umkehr-Stromrichter werden andererseits an einen Energiespeicher (3) angeschlossen,
1.3) in Echtzeit wird die im Drehstromnetz vorliegende momentane Ist-Spannung erfaßt und einem Rechner (4) zugeführt, der daraus eine ideale Soll-Spannung ermittelt,
1.4) die Umkehr-Stromrichter werden über einen Regler (5) nach Maßgabe der Differenz zwischen der momentanen Ist-Spannung und der idealen Soll-Spannung gesteuert,
wobei der Rechner für die Ermittlung der idealen Soll-Spannung nach Maßgaben eines Bandpaß-Modells betrieben wird, welches aus zwei hintereinander geschalteten Bandpässen (6.1, 6.2) besteht, die auf eine Frequenz von 50 Hz ± 0,1 Hz abgestimmt sind und phasendrehungsfrei arbeiten sowie eine Übertragungsfunktion 1 aufweisen.

2. Verfahren nach Anspruch 1, wobei eine ideale Soll-Spannung in Form einer oberschwingungsfreien 50 Hz Sinusspannung ermittelt wird.

3. Verfahren nach einem der Ansprüche 1 oder 2, wobei die Umkehr-Stromrichter an eine Akkumulatorenbatterie als Energiespeicher angeschlossen werden.

4. Verfahren nach einem der Ansprüche 1 oder 2, wobei die Umkehr-Stromrichter an einen supraleitenden magnetischen Energiespeicher angeschlossen werden.

5. Verfahren nach einem der Ansprüche 1 bis 4, wobei mit pulsweitenmodulierten Umkehr-Stromrichtern gearbeitet wird.

6. Verfahren nach einem der Ansprüche 1 bis 5, wobei mit Stromrichtern gearbeitet wird, die eine Schaltfrequenz oberhalb der Netzfrequenz aufweisen.

7. Verfahren nach einem der Ansprüche 1 bis 6, wobei mit einem Zweipunktregler gearbeitet wird, dessen Regelpunkte einerseits durch eine obere Toleranzschwelle und andererseits durch eine untere Toleranzschwelle in bezug auf die momentane ideale Soll-Spannung vorgegeben werden, und wobei so lange Leistung in das Drehstromnetz eingespeist wird, bis die obere Toleranzschwelle erreicht ist, und anschließend so lange Leistung aus dem Drehstromnetz aufgenommen und dem Energiespeicher zugeführt wird, bis die untere Toleranzschwelle erreicht ist, wobei die Ausregelzeitspanne Bruchteile einer Millisekunde beträgt.

8. Verfahren nach Anspruch 7, wobei der momentanen idealen Soll-Spannung drehstromnetzübliche Rundsteuersignale überlagert werden.

9. Vorrichtung zur Durchführung des Verfahrens nach einem der Ansprüche 1 bis 8, mit einem Energiespeicher (3) zur Leistungseinspeisung mit Hilfe eines aktiven Kompensators,
wobei an jede der drei Phasen (U, V, W) des Drehstromnetzes (1) ein Umkehr-Stromrichter (2.1, 2.2, 2.3) zur Ladung oder Entladung des Energiespeichers (3) je nach dem augenblicklichen Leistungseinspeisungsbedarf des Drehstromnetzes (1) angeschlossen ist,
wobei die drei Umkehrstromrichter (2.1, 2.2, 2.3) andererseits an den Energiespeicher (3) angeschlossen sind,
wobei ein Rechner (4) zur Ermittlung einer idealen Soll-Spannung aus der im Drehstromnetz (1) vorliegenden momentanen und in Echtzeit erfaßten und dem Rechner (4) zugeführten Ist-Spannung, vorgesehen ist,
wobei ein Regler (5) zur Steuerung der Umkehr-Stromrichter (2.1, 2.2, 2.3) nach Maßgabe der Differenz zwischen der momentanen Ist-Spannung und der idealen Soll-Spannung, vorgesehen ist,
wobei der Rechner für die Ermittlung der idealen Soll-Spannung nach Maßgabe eines Bandpaß-Modells eingerichtet ist, welches aus zwei hintereinander geschalteten Bandpässen (6.1, 6.2) besteht, die auf eine Frequenz von 50 Hz ± 0,1 Hz abgestimmt sind und phasendrehungsfrei arbeiten sowie eine Übertragungsfunktion 1 aufweisen
und wobei die vorgenannten Bauelemente der Vorrichtung zu einer eigenständigen Einheit zusammengefaßt sind.

## Claims

1. A method of improving the voltage quality in a three-phase mains system by feeding in power from an energy storage device (3) with the aid of an active compensator, comprising the following features:
1.1) a two-way inverter (2.1, 2.2, 2.3), which charges or discharges the energy storage device (3) depending on the instantaneous power feed requirement, is connected to each of the three phases of the three-phase mains,
1.2) the other sides of the three two-way inverters are connected to an energy storage device (3),
1.3) the instantaneous actual voltage which is present in the three-phase mains is determined in real time and is fed to a computer (4) which determines an ideal set voltage therefrom,
1.4) the two-way inverters are controlled via a controller (5) depending on the difference between the instantaneous actual voltage and the ideal set voltage,
wherein the computer for determining the ideal set voltage is operated in accordance with a band-pass model which consists of two band-pass filters (6.1, 6.2) which are connected in series, which are tuned to a frequency of 50 Hz ± 0.1 Hz, which operate free from phase angle rotation, and which have a return transfer function of 1.

2. A method according to claim 1, wherein an ideal set voltage is determined in the form of a 50 Hz sinusoidal voltage which is free from harmonics.

3. A method according to either one of claims 1 or 2, wherein the two-way inverters are connected to an accumulator battery as the energy storage device.

4. A method according to either one of claims 1 or 2, wherein the two-way inverters are connected to a superconducting magnetic energy storage device.

5. A method according to any one of claims 1 to 4, wherein pulse-width modulated two-way inverters are employed.

6. A method according to any one of claims 1 to 5, wherein two-way inverters are employed which have a switching frequency higher than the mains frequency.

7. A method according to any one of claims 1 to 6, wherein a two-point controller is employed , the control points of which are predetermined firstly by an upper tolerance threshold and secondly by a lower tolerance threshold with respect to the instantaneous ideal set voltage, and wherein power is fed into the three-phase mains until the upper tolerance threshold is reached, and power is subsequently withdrawn from the three-phase mains and fed to the energy storage device until the lower tolerance threshold is reached, wherein the time interval to effect compensation amounts to fractions of a millisecond.

8. A method according to claim 7, wherein ripple control signals which are customary for three-phase mains are superimposed on the instantaneous ideal set voltage.

9. An apparatus for carrying out the method according to any one of claims 1 to 8, having an energy storage device (3) for feeding in power with the aid of an active compensator,
wherein a two-way inverter (2.1, 2.2, 2.3), for charging or discharging the energy storage device (3) depending on the instantaneous power fecd requirement of the three-phase mains (1), is connected to each of the three phases (U, V, W) of the three-phase mains (1),
wherein the other sides of the three two-way inverters (2.1, 2.2, 2.3) are connected to the energy storage device (3),
wherein a computer (4) is provided for determining an ideal set voltage from the instantaneous actual voltage which is present in the three-phase mains (1), which is determined in real time and is fed to the computer (4).
wherein a controller (5) is provided for controlling the two-way inverters (2.1, 2.2. 2.3) according to the difference between the instantaneous actual voltage and the ideal set voltage,
wherein the computer is designed for determining the ideal set voltage in accordance with a band-pass model which consists of two band-pass filters (6.1, 6.2) which are connected in series, which are tuned to a frequency of 50 Hz ± 0.1 Hz, which operate free from phase angle rotation, and which have a return transfer function of 1,
and wherein the aforementioned components of the apparatus are assembled to form an autonomous unit.

## Revendications

1. Procédé pour améliorer la qualité de la tension dans un réseau de courant triphasé par apport de puissance à partir d'un accumulateur d'énergie (3) à l'aide d'un compensateur actif, possédant les caractéristiques suivantes :
1.1) à chacune des trois phases du réseau de courant triphasé est connecté un convertisseur-inverseur (2.1, 2.2, 2.3) qui, selon le besoin instantané en apport d'énergie du réseau de courant triphasé, charge ou décharge l'accumulateur d'énergie (3),
1.2) les trois convertisseurs-inverseurs sont par ailleurs connectés à un accumulateur d'énergie (3),
1.3) la tension instantanée réelle présente dans le réseau de courant triphasé est détectée en temps réel et transmise à un calculateur (4) qui en déduit une tension de consigne idéale,
1.4) les convertisseurs-inverseurs sont commandés par un régulateur (5) en fonction de la différence entre la tension instantanée réelle et la tension de consigne idéale,
le calculateur chargé de déterminer la tension de consigne idéale est piloté en fonction d'un modèle de passe-bande constitué de deux passe-bande montés en série (6.1, 6.2) qui sont calés sur une fréquence de 50 Hz ± 0,1 Hz, qui fonctionnent sans rotation de phase et qui possèdent une fonction de transfert de 1.

2. Procédé selon la revendication 1, dans lequel la tension de consigne idéale calculée est une tension sinusoïdale de 50 Hz exempte d'harmoniques.

3. Procédé selon l'une des revendications 1 ou 2, caractérisé en ce que les convertisseurs-inverseurs sont connectés à une batterie d'accumulateurs faisant fonction d'accumulateur d'énergie.

4. Procédé selon l'une des revendications 1 ou 2, dans lequel les convertisseurs-inverseurs sont connectés à un accumulateur d'énergie magnétique supraconducteur.

5. Procédé selon l'une des revendications 1 à 4, dans lequel les convertisseurs-inverseurs mis en oeuvre modulent les impulsions en largeur.

6. Procédé selon l'une des revendications 1 à 5, dans lequel les convertisseurs mis en oeuvre présentent une fréquence de commutation supérieure à la fréquence du réseau.

7. Procédé selon l'une des revendications 1 à 6, dans lequel on met en oeuvre un régulateur à deux points dont les points de régulation sont prédéfinis, d'une part, par un seuil de tolérance supérieur et, d'autre part, par un seuil de tolérance inférieur par rapport à la tension de consigne instantanée idéale, et dans lequel de la puissance est apportée au réseau de courant triphasé jusqu'à ce que le seuil de tolérance supérieur soit atteint, après quoi de la puissance est prélevée au réseau de courant triphasé et transmise à l'accumulateur d'énergie jusqu'à ce que le seuil de tolérance inférieur soit atteint, le délai de réglage s'exprimant en fractions de milliseconde.

8. Procédé selon la revendication 7, dans lequel des signaux de télécommande centralisée habituels aux réseaux de courant triphasé sont superposés à la tension de consigne instantanée idéale.

9. Dispositif pour la mise en oeuvre du procédé selon les revendications 1 à 8, comprenant un accumulateur d'énergie (3) pour apporter de la puissance à l'aide d'un compensateur actif,
dans lequel à chacune des trois phases (U, V, W) du réseau de courant triphasé (1) est connecté un convertisseur-inverseur (2.1, 2.2, 2.3) pour charger ou décharger l'accumulateur d'énergie (3) selon le besoin instantané en apport d'énergie du réseau de courant triphasé (1),
dans lequel les trois convertisseurs-inverseurs (2.1, 2.2, 2.3) sont par ailleurs connectés à l'accumulateur d'énergie (3),
dans lequel un calculateur (4) est prévu pour calculer une tension de consigne idéale à partir de la tension réelle instantanée qui est présente dans le réseau de courant triphasé (1), qui est détectée en temps réel et qui est transmise au calculateur (4),
dans lequel un régulateur (5) est prévu pour commander les convertisseurs-inverseurs (2.1, 2.2, 2.3) en fonction de la différence entre la tension instantanée réelle et la tension de consigne idéale,
dans lequel le calculateur est conçu pour déterminer la tension de consigne idéale en fonction d'un modèle de passe-bande constitué de deux passe-bande montés en série (6.1, 6.2) qui sont calés sur une fréquence de 50 Hz ± 0,1 Hz, qui fonctionnent sans rotation de phase et qui possèdent une fonction de transfert de 1,
et dans lequel les composants précités du dispositif sont rassemblés en une unité autonome.
